# EUROPÄISCHE PATENTANMELDUNG

(11) **EP 1 610 517 A1**
(43) Veröffentlichungstag der Anmeldung: **28.12.2005**
(21) Anmeldenummer: 04014808.2
(22) Anmeldetag: 24.06.2004
(51) Int. Cl.: H04L 29/06, G06F 9/46

(54) **Netzwerk zur Datenübermittlung zwischen Applikationen mit applikationsspezifischen Anwendungsadaptern**

(71) Anmelder: Siemens Schweiz AG, 8047 Zürich (CH)
(72) Erfinder: Gael, Jeanneret, 5034 Suhr (CH); Studer, Horst, 8002 Zürich (CH); Akeret, Felix, 8182 Hochfelden (CH)
(74) Vertreter: Fischer, Michael

(57) **Zusammenfassung**

Auf der Architektur CORBA basierende Anordnungen zur Datenübermittlung zwischen proprietären Datenquellen und Datensenken weisen den Nachteil auf, dass für neue anzubindende Applikation (101, 102; 201, 202) ein grosser Aufwand geleistet werden muss. Dazu ist es vorgesehen, dass die Requests/Responses als XML-Nachrichten ausgebildet sind.

Erfindungsgemäss ist ein Netzwerk zur Datenübermittlung zwischen Applikationen (101, 102, 103, 104; 201, 202) mit proprietären Schnittstellen, wobei
a) die Applikationen (101, 102, 103, 104; 201, 202)über einen Databroker (1) für die Datenübermittlung koppelbar sind,
b) die Datenübermittlung mittels Requests und Responses über den Databroker (1) durchführbar ist,
c) die Requests/Responses als XML-Nachrichten ausgebildet sind,
dadurch gekennzeichnet, dass
der Databroker (1) für jede der an ihm ankoppelnden Applikationen (101, 102, 201, 202) einen applikationsspezifischen Anwendungsadapter (50) aufweist, wobei jeder Anwendungsadapter (50) eine XML En-/Decoding Einheit (XML), ein generisches Interface (GI) und ein Benachrichtigungsinterface (GI) umfasst.

## Beschreibung

Die vorliegende Erfindung betrifft ein Netzwerk zur Datenübermittlung zwischen Applikationen mit proprietären Schnittstellen, bei dem die Applikationen über einen Databroker für die Datenübermittlung koppelbar sind, die Datenübermittlung mittels Requests und Responses über den Databroker durchführbar ist und die Requests/Responses als XML-Nachrichten ausgebildet sind.

Die vorliegende Erfindung ist auf dem Gebiet der Informations- und Kommunikationstechnologie angesiedelt. Bedingt durch die sehr vielfältigen Anforderungen in dieser Technologie sind in integrierten Systemen Computer und zugeordnete Anwendungen von verschiedensten Herstellern zu vernetzen.

Vom Gremium OMG wurde dazu die Architektur CORBA spezifiziert, über die die verschiedenen Anwendungen - auch Applikationen genannt - kommunizieren können. Sogenannte CORBA Applikationen bestehen aus einem oder mehreren Objekten, die ein Abbild eines oder mehrer realer Vorgänge - eine Funktion und zugeordnete Daten - repräsentieren. Jedem Objekt ist dabei ein Typ zugeordnet. Üblicherweise gibt es mehrere Instanzen eines Objektes. Eine E-Commerce Web-Applikation besteht aus denjenigen Instanzen, die dem Warenkorb der momentanen Anwender bzw. Kunden dieser Web-Applikation entsprechen. Für die Spezifikation der Architektur CORBA wird auf das Dokument [1] verwiesen.

Für jeden Objekttyp ist abhängig von der jeweiligen Laufumgebung eine Schnittstellendefinition notwendig. Die Applikationen haben auf CORBA-Vorgaben abgestützte Schnittstellen, welche in der CORBA-IDL (Interface Definition Language) definiert und dann in die verschiedenen Implementationssprachen der Zielsysteme übersetzt und implementiert werden. Der grosse Vorteil der CORBA basierten Produkte ist dabei die sprachenübergreifende, plattformübergreifende und für heterogene Systeme geeignete Funktionsweise.

In der Praxis hat sich gezeigt, dass die vorgenannte Architektur einen Datenaustausch zwischen verschiedenen Datenquellen und Datensenken auf zuverlässige und zweckmässige Weise erlauben und zwar auch dann, wenn die betreffenden Schnittstellen hochgradig proprietär sind. Nachteilig ist jedoch, dass für neue anzubindende Applikation ein grosser Aufwand geleistet werden muss.

In der internationalen Patentanmeldung PCT/EP03/01982 werden zur Lösung dieser Aufgabe eine Anordnung und ein Verfahren zur Datenübermittlung von Applikationen mit proprietären Schnittstellen vorgeschlagen, bei denen die Applikationen über einen Databroker für die Datenübermittlung koppelbar sind und die Datenübermittlung mittels Requests und Responses über den Databroker durchführbar ist und die Requests/Responses als XML-Nachrichten ausgebildet sind. Auf diese Weise können in einem hohen bedienerfreundlichen Masse Anpassungen und das Einbinden neuer Applikationen in ein bestehendes Netzwerk vorgenommen werden, ohne dass die bestehenden Applikationen genauere Kenntnisse von dem Aufbau der nachfolgend eingebundenen oder angepassten Applikationen haben müssen, wenn sie mit diesen zwecks der Erledigung ihrer bestimmungsgemässen Aufgabe kommunizieren wollen.

Nachteilig ist jedoch in diesem Umfeld, dass die Organisation des Datenaustausches besonders im Fall der Integration neuer Applikationen aufwendig ist, weil im besonderen dem zentralen Datenserver und der neuen Schnittstelle zu dieser Applikation ein hoher integrativer Aufwand zufällt.

Der Erfindung liegt daher die Aufgabe zugrunde, ein Netzwerk anzugeben, das es im besonderen zur Integration neuer Applikationen ermöglicht, den für die spätere bestimmungsgemässe Funktion der Applikation erforderlichen Datenverkehr besonders einfach zu initialisieren und nachfolgend im Alltagsbetrieb des Netzwerkes durchführen zu können.

Diese Aufgabe wird erfindungsgemäss durch ein Netzwerk zur Datenübermittlung zwischen Applikationen mit proprietären Schnittstellen gelöst, bei dem der Databroker für jede der an ihm ankoppelnden Applikationen einen applikationsspezifischen Anwendungsadapter aufweist, wobei jeder Anwendungsadapter eine XML En-/Decoding Einheit, ein generisches Interface und ein Benachrichtigungsinterface umfasst.

Auf diese Weise besteht für alle Applikationen ein vom Grundtyp her immer gleicher Anwendungsadapter zur Verfügung, der mit seiner XML En-/Decoding Einheit den Verkehr der Nutzdaten vollkommen unabhängig von der Art und dem Umfang der Nutzdaten gewährleistet. Davon getrennt übernimmt das generische Interface die Verwaltung der Applikation hinsichtlich der benötigten und/oder gelieferten Nutzdaten im Netzwerk. Weiter stellt das Benachrichtigungsinterface sicher, dass für andere im Netzwerk eingebundene Applikationen relevante Daten dieser Applikation entsprechend zur Verfügung gestellt werden bzw. von den übrigen Applikation erhalten werden.

In zweckmässiger Ausgestaltung der Erfindung können daher mittels der XML En-/Decoding Einheit die für eine Applikation erforderlichen Daten und/oder die von einer Applikation gelieferten Daten in ein XML Format verpackt werden und/oder aus einem XML Format entpackt werden. Auf diese Weise stellt das XML Format einen Rahmen dar, innerhalb dessen beliebige Nutzdaten von verschiedenen Applikation durch das Netzwerk transportiert werden können.

Damit bereits im Netzwerk eingebundene Applikation überhaupt Kenntnis davon haben, welche Applikationen tatsächlich eingebunden sind oder welche Applikation neu hinzugekommen ist, kann ein zentraler Namensverwaltungsdienst vorgesehen sein, bei dem sich die zugehörige Applikation mittels ihres generischen Interfaces anmeldet. Weiter kann das generische Interface so ausgestaltet sein, dass es bei dem zentralen Namensverwaltungsdienst die Namen der Daten hinterlegt, die von dieser Applikation benötigt werden und/oder geliefert werden können.

Um den Datenaustausch nun effektiv gestalten zu können und um es auch neu hinzugekommenen Applikationen zu ermöglichen, auf Daten bereits bestehender Applikationen zuzugreifen oder diese mit Daten zu versorgen, kann ganz gezielt das Benachrichtigungsinterface genutzt werden, um eine Applikation bei einem zentralen Benachrichtigungsdienst als Abonnent von bestimmten Daten und/oder als Lieferant von bestimmten Daten registrieren zu lassen. Damit wird auch eine saubere Trennung vollzogen zwischen der dem Namenverwaltungsdienst zur Verfügung zu stellenden Information und dem eigentlichen Abrufen oder Zurverfügungstellen von Daten, was insbesondere auch die Einbindung neuer Applikationen in das Netzwerk wie auch die Modifikation des Datenbedarfs bestehender Applikationen vereinfacht.

Um im besonderen die Applikationen, die Abonnenten von bestimmten Daten sind, möglichst schnell mit den für sie erforderlichen aktuellen Daten bedienen zu können, kann mittels des zentralen Benachrichtigungsdienstes im Falle einer Datenänderung eine Datenänderungsmeldung an alle die Benachrichtigungsinterfaces versendet werden, für die die zugehörige Applikation als Abonnent dieser Daten im zentralen Benachrichtigungsdienst registriert ist. Entsprechend kann in der anderen Richtung das Benachrichtigungsinterface so ausgestaltet sein, dass im Falle einer Datenänderung in einer Applikation (ggfs. auch durch einen von einer anderen Applikation stammenden Dateninput) eine Update-Meldung an den zentralen Benachrichtigungsdienst versendet werden. Weiter kann das Benachrichtigungsinterface so gestaltet sein, dass eine Nachfrage nach bestimmten aktuell von einer Applikation benötigten Daten an den zentralen Benachrichtigungsdienst gesendet werden kann. Auf diese Weise kann eine Applikation auch selbständig die von ihr abonnierten Daten bestimmen und disponieren.

Weitere vorteilhafte Ausgestaltungen der Erfindung sind den übrigen Unteransprüche zu entnehmen.

Die Erfindung wird nachfolgend anhand einer Zeichnung beispielsweise näher erläutert. Dabei zeigen:
- Figur 1: Übersicht der Anordnung von verschiedenen Applikation, die über einen auf CORBA basierenden Databroker Daten austauschen;
- Figur 2: ein gemäss der Anordnung nach Figur 1 arbeitendes Kommunikationsnetzwerk mit einem ersten Beispiel zur Funktion der Anwendungsadapter; und
- Figur 3: ein gemäss der Anordnung nach Figur 1 arbeitendes Kommunikationsnetzwerk mit einem zweiten Beispiel zur Funktion der Anwendungsadapter.

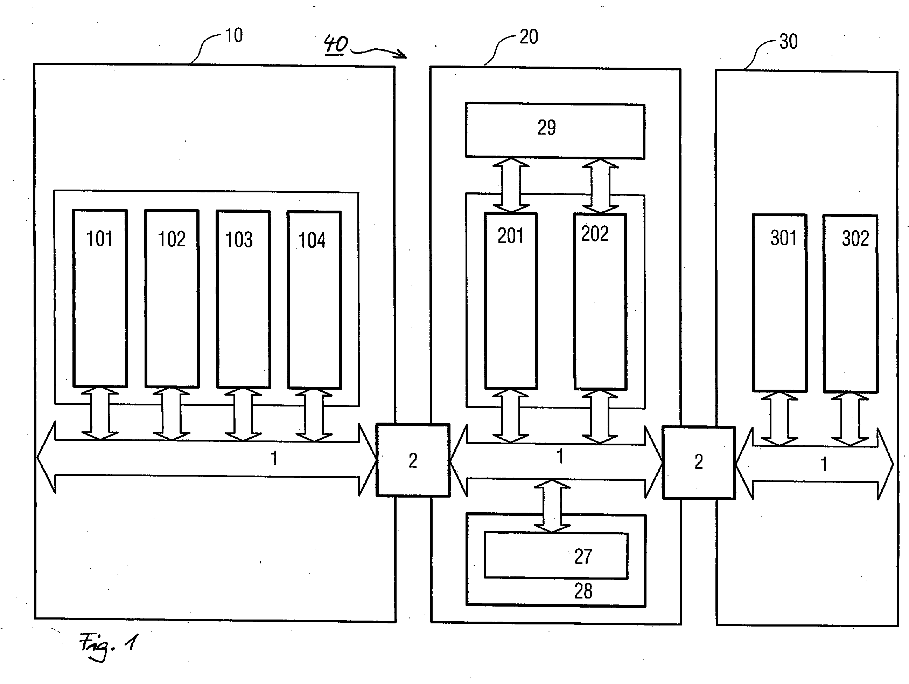

Das nachfolgende Ausführungsbeispiel betrifft ein integriertes Wetterdienst-System. Figur 1 zeigt eine Übersicht der Anordnung von verschiedenen Applikation, die über einen auf CORBA basierenden Databroker 1 Daten austauschen,. Der Databroker ist dabei als CORBA/ORB-Datenbroker ausgebildet.

Mit dem Bezugszeichen 10 sind sogenannte Umsysteme bezeichnet. Die einzelnen Anwendungen 101, 102, 103, 104 usw. stehen beispielsweise für ein Wetterdatenbewertungssystem, für ein Kommunikationssystem zur Erfassung von Bodenluftdruck- und -temperaturdaten, usw. Die Umsysteme 10 sind dabei die erforderlichen Teilsysteme und dienen somit der Unterstützung der von dem Wetterdienst-System zu erfüllenden Aufgabe. Mit dem Bezugszeichen 20 sind sogenannte Eingriffsysteme bezeichnet. Die einzelnen Eingriffsysteme 201, 202 stehen dabei beispielsweise für die Steuerung des Einsatzes von mobilen Wetterstationen, wie aufsteigende Wetterballons, sowie die generelle Steuerung von automatischen Wetterstationen. Von der Anwendung her sind die vorgenannten zwei Eingriffsysteme 201, 202 über ein Portal 29 zugänglich. Hilfssysteme 30 beinhalten z.B. einen Notifikationsdienst 301, eine Workflow Engine 302, einen Namensdienst usw.

Umsysteme 10 und Eingriffsysteme 20 sind dabei natürlich nicht an einem Ort angeordnet, sondern in der Regel über ein Gebiet, wie z.B. ein Land, verteilt. Um den Zugriff auf die Daten wirksam hinsichtlich Integrität der Daten und Wahrung der Vertraulichkeit der Daten zu schützen, ist der Databrokern 1 durch sogenannte Dataguards 2 unterteilt. Diesen Dataguards 2 kommt die Funktion einer Firewall zu. Davon zu unterscheiden ist eine Verschlüsselung, die weiter unten beschrieben wird.

Die dem Wetterdienst-System zugehörigen Daten werden in einer einer relationalen Datenbank 27 gehalten; Zugriff und Administration erfolgen über einen Datamanager 28.

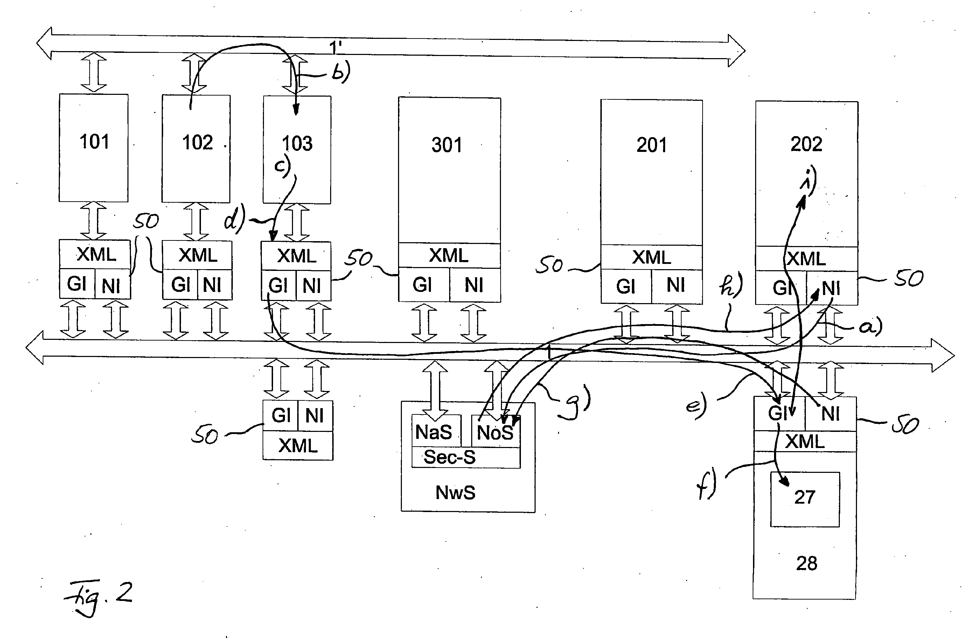

Da die Umsysteme 10 und die Eingriffssysteme 20 in der Regel ein eher komplexes Netzwerk darstellen, innerhalb dessen einerseits die Anwendungen 101 bis 104, 201, 202 mehr oder weniger ständigen Veränderungen unterworfen sind und andererseits komplett neue Anwendungen hinzutreten oder bestehende Anwendungen ausscheiden, sind im vorliegenden Ausführungsbeispiel Anwendungsadapter 50 (Fig. 2) vorgesehen, die es aufgrund ihres Aufbaus ermöglichen, diese voranstehend genannten Anpassungsfunktionen besonders einfach und mit nur geringem Aufwand zu bieten.

Mit Bezug auf Figur 2 ist in dem Kommunikationsnetzwerk nach Figur 1 ein diesbezüglicher Arbeitsfluss der Anwendungsadapter 50 mit den Schritten a) bis i) gezeigt. Die Anwendungsadapter 50 haben alle den gleichen Aufbau, der im wesentlichen ein XML-En-/Decoding XML, ein generisches Interface GI und ein Benachrichtigungsinterface NI umfasst. Das XML En-/Decoding XML sorgt dabei dafür, dass die für die Anwendung erforderlichen Nutzdaten und/oder die von der Anwendung gelieferten Nutzdaten in einem XML Rahmen durch den Data Broker 1 transportiert werden. Die Funktion des generischen Interfaces GI und des Benachrichtigungsinterfaces NI sind am besten anhand des Arbeitflusses a) bis i) erläuterbar.

In diesem Ausführungsbeispiel wird zusätzlich ein Datenbus 1' vorgesehen, der beispielsweise aufgrund einer älteren Verknüpfung der Anwendungen 102 und 103 noch zu einem Datenaustausch dieser beiden Anwendungen genutzt wird. Die Anwendung 202 erfährt nun beispielsweise eine Umprogrammierung und benötigt nun mehr bestimmte neue Daten, die diese Anwendung vorher noch nicht erhalten hat. Für diesen ersten Schritt a) meldet sich daher das Benachrichtigungsinterface NI der Anwendung 202 als Interessent für diese Daten bei einem in einem Netzwerkservice NwS angeordneten Benachrichtigungsdienst NoS an. Irgendwann später meldet die Anwendung 102 in einem Schritt b) eine Datenänderung über den Datenbus 1' an die Anwendung 103. Die geänderten Daten werden in einem Schritt c) in eine lokale Datenbank der Anwendung 103 geschrieben, also dort aktualisiert. Der Anwendungsadapter 50 der Anwendung 103 nimmt daraufhin in einem Schritt d) die Aktualisierung dieser Daten wahr, indem er beispielsweise mittels Datenbank-Trigger oder durch Monitoring das Geschehen auf der lokalen Datenbank der Anwendung 103 verfolgt hat.

Die nun im XML Format verpackten aktualisierten Daten werden nun vom Anwendungsadapter 50 mit Hilfe seines generischen Interfaces GI in einem Schritt e) an das generische Interface GI des Anwendungsadapters 50 des Datei-Managers 28 gesendet, was im Schritt f) mit einer Aktualisierung der zentralen Datenbank 27 resultiert. Der Datei-Manager 27 sendet in Antwort auf die erfolgte Aktualisierung mittels seines Benachrichtigungsinterfaces NI im Schritt g) eine Benachrichtigung an den Benachrichtigungsdienst NoS, dass bestimmte Daten nun in aktualisierten Form in der zentralen Datenbank 27 vorliegen. Aufgrund ihrer Anmeldung im Schritt a) erhält nun die Anwendung 202 von dem Benachrichtigungsdienst NoS im Schritt g) eine diesbezügliche Aktualisierungsmeldung am Benachrichtigungsinterface NI.

Selbstverständlich erhalten auch alle übrigen Anwendungen, die sich beim Benachrichtigungsdienst NoS für diese Daten angemeldet haben, einen entsprechenden Hinweis. Mit einem bidirektionalen Pfeil zwischen den generischen Interfaces GI der Anwendung 202 und dem Datei-Manager 28 werden in einem Schritt i) nun die aktualisierten Daten aus der zentralen Datenbank 27 abgerufen und an die Anwendung 202 übermittelt. Dabei sorgt das Decoding im XML En-/Decoding XML dafür, dass die in einem XML Rahmen transportierten Daten nun in der für die Anwendung 202 erforderlichen Form zur Verfügung stehen.

Für die weitere Betrachtung des Ausführungsbeispiels nach der Figur 2 wird jetzt angenommen, dass die Anwendung 102 modernisiert und stärker an den Data Broker 1 angebunden wird. Es ist diesbezüglich nur der Anwendungsadapter 50 der Anwendung 102 zu modifizieren, die sich mittels des generischen Interfaces GI bei dem Namensdienst NaS anmeldet und dort mitteilt, welche Daten die Anwendung 102 nun direkt liefert. Entsprechend wird das generische Interface GI diesbezügliche aktualisierte Daten direkt an das generische Interface GI des Datei-Managers 28 senden. Die darauffolgende weitere Benachrichtigung und der Datenaustausch läuft dann wie bereits beschrieben mit den Schritten g), h) und i) ab.

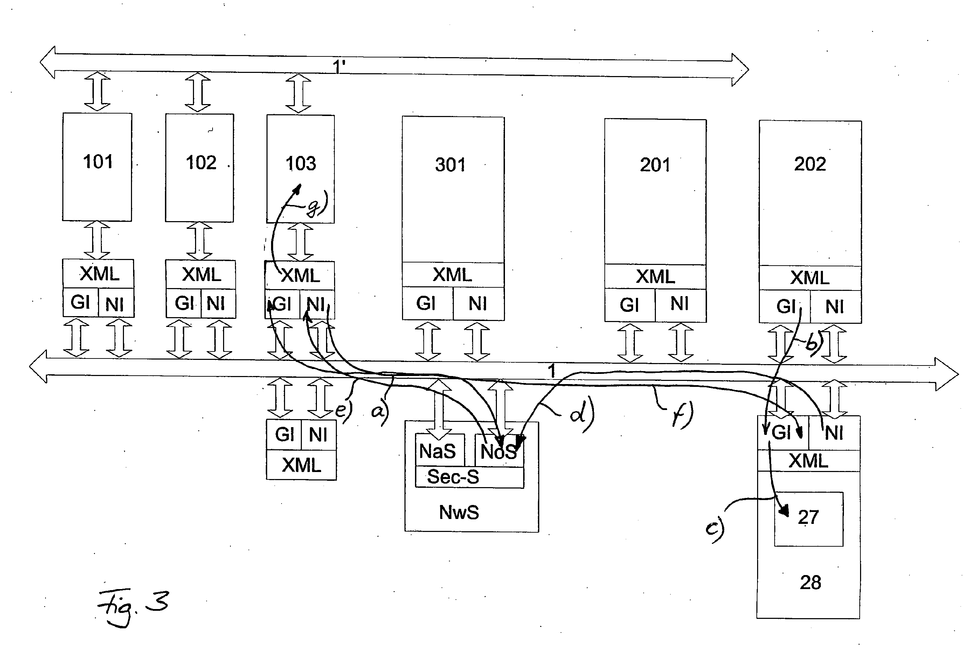

Figur 3 zeigt einen beispielhaften Funktionsablauf nun aus der Sicht der Anwendung 103 mit den Schritten a) bis g) in schematischer Darstellung. Die Anwendung 103 meldet sich gemäss Schritt a) mit Hilfe ihres Benachrichtigungsinterface NI als Interessent für bestimmte Daten der Anwendung 202 bei dem Benachrichtigungsdienst NoS an. Auch findet zu einem späteren von der Anmeldung unabhängigen Zeitpunkt im Schritt b) eine Sendung von aktualisierten Daten statt, die im Schritt c) zu einer Aktualisierung der zentralen Datenbank 27 führt. Für diesen Datenaustausch sind wiederum ausschliesslich die generischen Interfaces GI zuständig, die die im XML Rahmen verpackten Daten bereitstellen bzw. erhalten. Das Encoding und das Decoding dieser XML Rahmen erfolgt wie gehabt im XML En-/Decoding XML der jeweiligen Anwendungsadapter 50 von Anwendung 202 und Datei-Manager 28. Im Schritt d) meldet das Benachrichtigungsinterface NI die Aktualisierung dieser Daten an den Benachrichtigungsdienst NoS, der im Schritt e) u.a. auch die Anwendung 103 an ihrem Benachrichtigungsinterface NI über die Datenaktualisierung informiert. Entsprechend symbolisiert der bidirektionale Pfeil im Schritt f) den Abruf und die Lieferung der aktualisierten Daten über die jeweiligen generischen Interfaces GI. Abschliessend erfolgt im Schritt f) nach erfolgtem XML Decoding die Aktualisierung der Daten auf einer lokalen Datenbank der Anwendung 103.

Auch diese Beispiel zeigt aufgrund der klaren Struktur des Anwendungsadapters 50, in welch einfacher Weise Daten innerhalb des gezeigten Kommunikationsnetzwerkes ausgetauscht werden können. Besonders die einfache Struktur von generischen Interface, also dem operativen Senden und/oder Erhalten von Daten, und Benachrichtigungsinterface, also dem operativen Mitteilen, welche Daten benötigt oder geliefert werden, macht es im besonderen möglich, die Einbindung von neuen Anwendungen in einfacher und vom Aufwand her vertretbarer Weise zu bewerkstelligen.

Im Rahmen der vorliegenden Erfindung sind daher natürlich eine nahezu unbegrenzte Anzahl von Änderungen und Modifikation möglich. Besonders zu erwähnen ist u.a. auch noch die Möglichkeit, dass sich die Anwendungen auch direkt unter Umgehung der zentralen Datenbank 27 bei anderen Anwendungen mit Daten versorgen können. Diese diesbezüglichen Abläufe werden im wesentlichen vom Namensservice NaS administriert bzw. durch aktive Anmeldung beim Benachrichtigungsdienst initiiert.

### Liste der verwendeten Akronyme

- CORBA: Common Object Request Broker Architecture
- IDL: Interface Definition Language
- OMG: Object Management Group
- ORB: Object Request Broker
- RDBMS: Relationales Datenbankmanagmentsystem
- XML: Extensible Markup Language

### Literaturliste

[1] Common Object Request Broker Architecture: Core Specification, December 2002, Version 3.0

## Patentansprüche

1. Netzwerk zur Datenübermittlung zwischen Applikationen (101, 102, 103, 104; 201, 202) mit proprietären Schnittstellen, wobei
a) die Applikationen (101, 102, 103, 104; 201, 202)über einen Databroker (1) für die Datenübermittlung koppelbar sind,
b) die Datenübermittlung mittels Requests und Responses über den Databroker (1) durchführbar ist,
c) die Requests/Responses als XML-Nachrichten ausgebildet sind,
**dadurch gekennzeichnet, dass**
der Databroker (1) für jede der an ihm ankoppelnden Applikationen (101, 102, 201, 202) einen applikationsspezifischen Anwendungsadapter (50) aufweist, wobei jeder Anwendungsadapter (50) eine XML En-/Decoding Einheit (XML), ein generisches Interface (GI) und ein Benachrichtigungsinterface (GI) umfasst.

2. Netzwerk (40) nach Anspruch 1,
**dadurch gekennzeichnet, dass**
mittels der XML En-/Decoding Einheit (XML) die für eine Applikation (101, 102, 103, 104; 201, 202) erforderlichen Daten und/oder die von einer Applikation (101, 102, 103, 104; 201, 202) gelieferten Daten in ein XML Format verpackbar und/oder aus einem XML Format entpackbar sind.

3. Netzwerk (40) nach Anspruch 1 oder 2,
**dadurch gekennzeichnet, dass**
mittels des generischen Interfaces (GI) bei einem zentralen Namensverwaltungsdienst (NaS) die zugehörige Applikation (101, 102, 103, 104; 201, 202) anmeldbar ist.

4. Netzwerk (40) nach Anspruch 3,
**dadurch gekennzeichnet, dass**
mittels des generischen Interfaces (GI) bei einem zentralen Namensverwaltungsdienst (NaS) die Namen der Daten hinterlegbar sind, die von dieser Applikation (101, 102, 103, 104; 201, 202) benötigt und/oder geliefert werden.

5. Netzwerk (40) nach einem der Ansprüche 1 bis 4,
**dadurch gekennzeichnet, dass**
mittels des Benachrichtigungsinterfaces (NI) eine Applikation (101, 102, 103, 104; 201, 202) bei einem zentralen Benachrichtigungsdienst (NoS) als Abonnent von bestimmten Daten und/oder als Lieferant von bestimmten Daten registrierbar ist.

6. Netzwerk (40) nach Anspruch 5,
**dadurch gekennzeichnet, dass**
mittels des zentralen Benachrichtigungsdienstes (NoS) im Falle einer Datenänderung eine Datenänderungsmeldung an alle die Benachrichtigungsinterfaces (NI) versendbar ist, für die die zugehörige Applikation (101, 102, 103, 104; 201, 202) als Abonnent dieser Daten im zentralen Benachrichtigungsdienst (NoS) registriert ist.

7. Netzwerk (40) nach Anspruch 5 oder 6,
**dadurch gekennzeichnet, dass**
mittels des Benachrichtigungsinterface (NI) im Falle einer Datenänderung in einer Applikation (101, 102, 103, 104; 201, 202) eine Update-Meldung an den zentralen Benachrichtigungsdienst (NoS) versendbar ist.

8. Netzwerk (40) nach einem der Ansprüche 5 bis 7,
**dadurch gekennzeichnet, dass**
eine Applikation (101, 102, 103, 104; 201, 202) mittels des Benachrichtigungsinterfaces (NI) eine Nachfrage nach bestimmten aktuell von der Applikation (101, 102, 103, 104; 201, 202) benötigten Daten an den zentralen Benachrichtigungsdienst (NoS) sendet.
